# EUROPÄISCHE PATENTSCHRIFT

(11) **EP 1 575 812 B1**
(45) Veröffentlichungstag und Bekanntmachung des Hinweises auf die Patenterteilung: **22.02.2012**
(21) Anmeldenummer: 03813522.4
(22) Anmeldetag: 01.08.2003
(51) Int. Cl.: B60S 1/38, B60S 1/40

(54) **VERBINDUNGSANORDNUNG EINER WISCHVORRICHTUNG FÜR SCHEIBEN VON KRAFTFAHRZEUGEN**
CONNECTOR ARRANGEMENT FOR A WIPER DEVICE ON MOTOR VEHICLE WINDSCREENS
ENSEMBLE DE LIAISON POUR UN DISPOSITIF D'ESSUYAGE DESTINE A DES VITRES DE VEHICULES AUTOMOBILES

(30) Priorität: 19.12.2002 DE 10259477
(43) Veröffentlichungstag der Anmeldung: 21.09.2005
(73) Patentinhaber: ROBERT BOSCH GMBH, 70442 Stuttgart (DE)
(72) Erfinder: WILMS, Christian, B-3582 Beringen (Koersel) (BE); VAN BAELEN, David, B-3020 Herent (BE)
(86) Internationale Anmeldenummer: PCT/DE2003/002601
(87) Internationale Veröffentlichungsnummer: WO 2004/056624

(56) Entgegenhaltungen:
- WO-A-00/73111
- WO-A-01/30623
- WO-A-02/066300
- DE-A1- 10 036 135
- FR-A1- 2 324 489
- US-A1- 2002 174 505

## Beschreibung

Die Erfindung betrifft eine Verbindungsanordnung einer Wischvorrichtung für Scheiben von Kraftfahrzeugen mit den im Oberbegriff der unabhängigen Patentansprüche genannten Merkmalen.

### Stand der Technik

Es sind verschiedene Ausführungen von Wischblättern für Scheiben von Kraftfahrzeugen bekannt. Gelenkfreie Wischblätter besteht typischerweise aus einer Wischleiste, die mittels einer oder zwei Federschiene versteift ist und die eine an der Scheibe anlegbare Wischlippe aufweist. Das Wischblatt ist ungefähr mittig mittels eines Adapters bzw. eines Kupplungsteils lösbar an einem schwenkbaren Wischerarm des Kraftfahrzeugs fixierbar. Der Wischerarm weist hierbei einen endseitigen Adapterabschnitt mit einem daran befindlichen Stift auf, der in eine Buchse des Kupplungsteils des Wischarms gesteckt werden kann und dessen Schwenkbewegung um die Mittelachse des Stifts ermöglicht.

In einer Betriebsstellung sind die Längserstreckungsrichtungen des Wischblatts und des Wischerarms annähernd parallel zueinander ausgerichtet. In dieser Stellung wird das Wischblatt mittels eines das Kupplungsteil teilweise umgreifenden Hakens daran gehindert, aus seiner Stiftlagerung heraus gezogen zu werden. Gleichzeitig bildet der Haken einen Drehwinkelanschlag für das Wischblatt. Derartige gelenklose Wischblätter eignen sich üblicherweise nicht zur Montage an herkömmlichen Wischerarmen, die keinen Stift zur schwenkbaren Verbindung mit dem Kupplungsteil aufweisen, sondern zur Aufnahme eines Befestigungsclips vorgesehen sind. Hierzu ist ein freies Ende des Wischerarms üblicherweise als U-förmige Aufnahme ausgebildet bzw. gebogen.

### Vorteile der Erfindung

Eine Anordnung zur lösbaren Verbindung eines Wischblatts an einem schwenkbaren Wischerarm einer Wischvorrichtung für Scheiben von Kraftfahrzeugen gemäß einer ersten Ausführungsform der Erfindung weist eine mit dem Wischblatt verbindbare bzw. an diesem angeordnete Buchse zur Aufnahme einer Steckachse des Wischerarm und eine Einrichtung zur Verriegelung der Steckachse in der Buchse zumindest in einer Betriebsstellung des Wischblatts auf. Die Betriebsstellung ist dadurch charakterisiert, dass hierbei die Längserstreckungsrichtungen des Wischblatts und des Wischerarms annähernde parallel zueinander ausgerichtet sind.

Die Verbindungsanordnung sieht vor, dass die Einrichtung zur Verriegelung einen am Wischerarm angeordneten Fanghaken umfasst, der in der Betriebsstellung eine die Buchse enthaltene Abdeckung eines Kupplungselements des Wischblattes teilweise umgreift und der einen Winkelanschlag für das Wischblatt bildet. Hierbei setzt sich das freie Ende des Wischerarms in dem Fanghaken fort, der eine damit korrespondierende Abdeckung des Kupplungselements des Wischblatts zumindest teilweise umgreift, sobald das Wischblatt in Nähe der Betriebsstellung verschwenkt wird. Vorzugsweise kann die Steckachse nur dann in die Buchse des Kupplungselements eingeschoben werden, wenn sich das Wischblatt außerhalb einer Betriebsstellung befindet, d.h. beispielsweise um 90° gegen den Wischerarm verschwenkt ist. Sobald das Wischblatt hingegen um einen kleinen Winkel aus dieser Montagestellung verschwenkt wird, blockiert der die Abdeckung umgreifende Fanghaken die Steckachse in der Buchse und verhindert somit ein Herausziehen aus dieser. Wie die bereits zuvor beschriebenen Varianten stellt auch diese dritte Variante eine einfach herzustellende und zu handhabende Verbindungsanordnung eines Wischblattes mit einem Wischerarm zur Verfügung, die sich zudem durch eine kostengünstige Herstellbarkeit auszeichnet.

Die zuvor beschriebene Anordnung zeichnet sich vorzugsweise dadurch aus, dass die Steckachse nur in einem vorgegebenen von der Betriebsstellung verschiedenen Winkelbereich in axialer Richtung in der Buchse verschiebbar ist. Das Wischblatt ist ausschließlich in einer Winkelstellung außerhalb der Betriebsstellung vom Wischerarm trennbar.

Die erfindungsgemäße Anordnung ermöglicht eine einfach zu verriegelnde und zu lösende Verbindung zwischen einem Wischblatt und einem Wischerarm einer Scheibenwischvorrichtung für Kraftfahrzeuge. Diese Verbindungsanordnung zeichnet sich durch eine äußerst einfache Bedienbarkeit und durch eine aufgrund nur weniger Bauteile kostengünstige Herstellbarkeit aus.

Dokument DE-A-10036135 offenbart eine Anordnung gemäß der Oberbegriff des Anspruchs 1.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigen:
- Figuren 1 bis 3: schematische Perspektivansichten einer nicht beanspruchten Variante der Verbindungsanordnung,
- Figuren 4 bis 9: eine zweite, nicht beanspruchte Variante der Verbindungsanordnung in schematischen Perspektivdarstellungen,
- Figuren 10 bis 13: der erfindungsgemäßen Verbindungsanordnung in schematischen Perspektivdarstellungen,
- Figuren 14 bis 17: eine vierte nicht beanspruchte Variante der Verbindungsanordnung in schematischen Perspektivdarstellungen und
- Figuren 18 bis 21: eine fünfte, nicht beanspruchte Variante der Verbindungsanordnung in schematischen Perspektivdarstellungen.

### Beschreibung der Ausführungsbeispiele

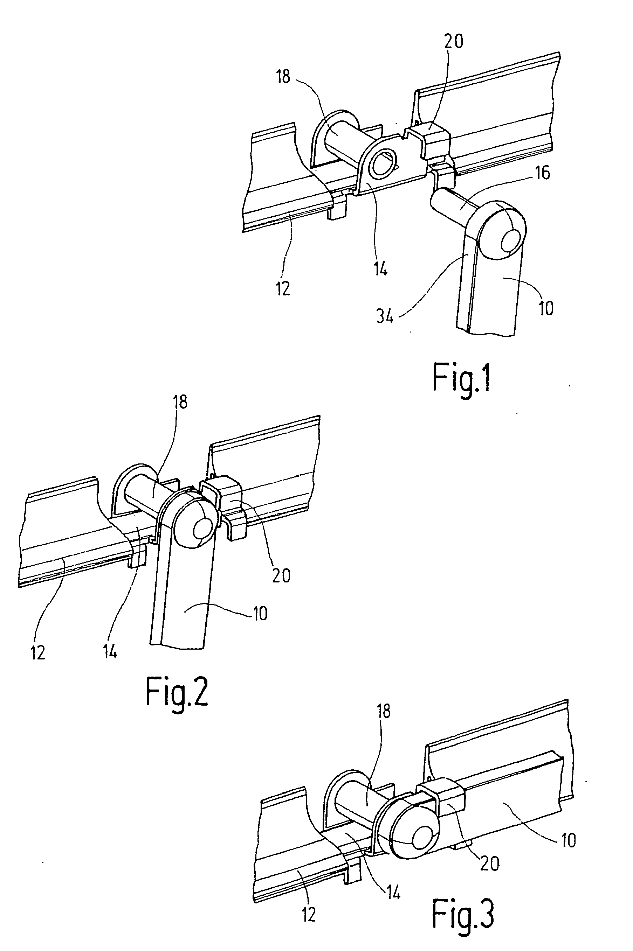

Eine erste Variante einer erfindungsgemäßen Verbindungsanordnung wird anhand der Figuren 1 bis 3 verdeutlicht. An einem freien Ende 34 eines schwenkbaren Wischerarms 10 ist eine rechtwinkelig zur Längserstreckungsrichtung des Wischerarms 10 ausgerichtete Steckachse 16 angeordnet, die in eine Buchse 18 eines Kupplungselements 14 einschiebbar und dort um eine gemeinsame Längsachse der Steckachse 16 und der Buchse 18 verschwenkbar ist. Das Kupplungselement 14 ist Teil eines Wischblatts 12 und vorzugsweise fest mit diesem verbunden. Am Kupplungselement 14 ist weiterhin ein Fanghaken 20 vorgesehen, der den Wischerarm 10 in einer Betriebsstellung des Wischblatts 12 teilweise umgreift, bei der die Längserstreckungsrichtungen von Wischerarm 10 und Wischblatt 12 weitgehend parallel zueinander ausgerichtet sind (vgl. Figur 3). Figur 1 zeigt das vom Wischerarm 10 getrennte Wischblatt 12. Figur 2 verdeutlicht die in die Buchse 18 eingeschobene Steckachse 16, wobei das Wischblatt 12 aus einer Betriebsstellung gedreht ist, so dass der Fanghaken 20 den Wischerarm 10 nicht umgreift.

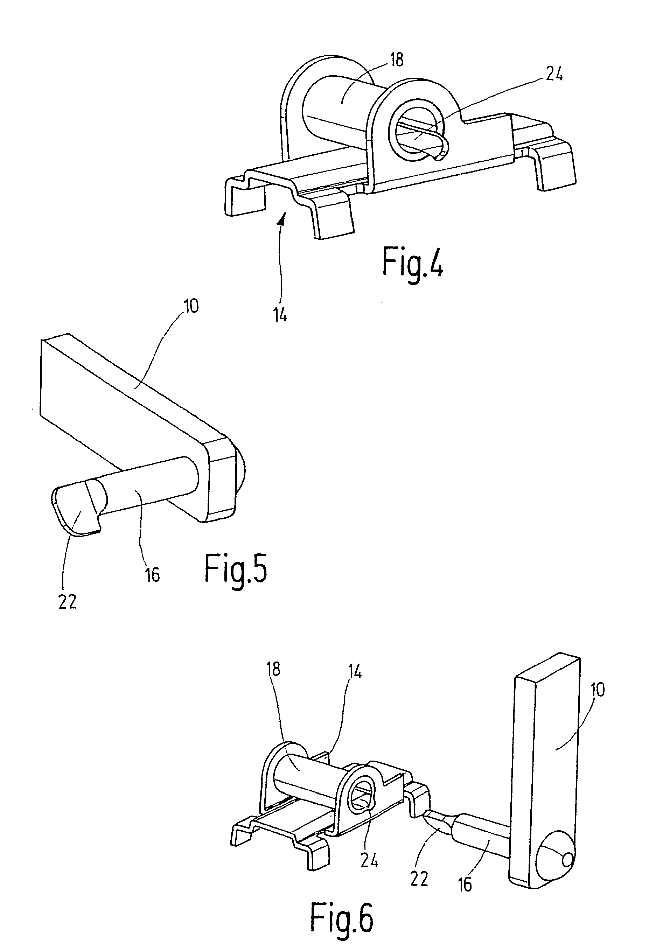

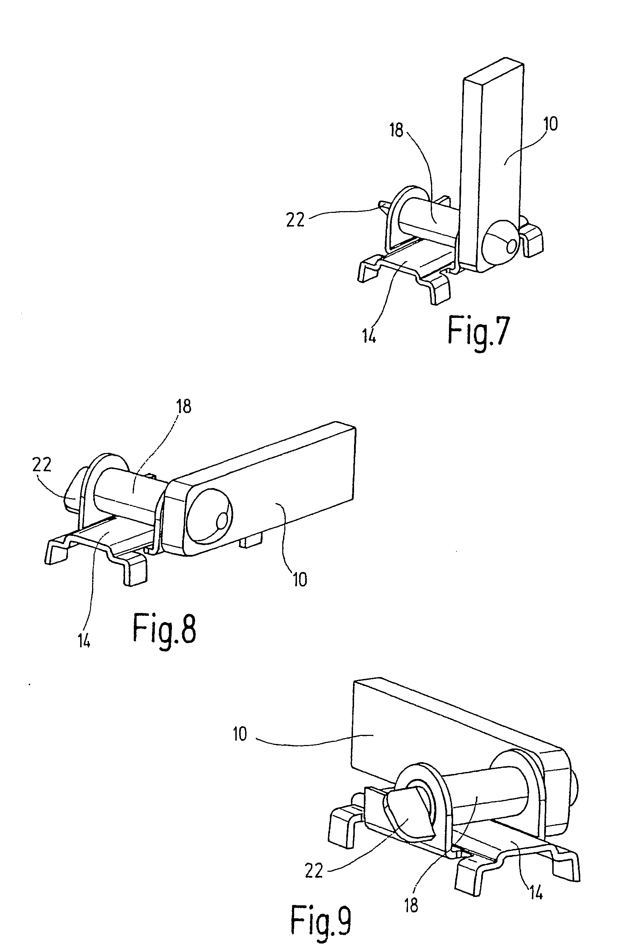

Die Figuren 4 bis 9 verdeutlichen eine zweite, nicht erfindungsgemäße Variante einer Verbindungsanordnung. Das fest am Wischblatt angebrachte Kupplungselement 14 weist wiederum eine Buchse 18 zum Einschieben einer am Wischerarm 10 befestigten Steckachse 16 auf. Die Buchse 18 weist in ihrer zylindrischen Innenmantelfläche eine zu ihrer Längsachse parallele Längsnut 24 auf (vgl. Figur 4), die mit einem Bügel 22 am Ende der Steckachse 16 korrespondiert (vgl. Figur 5). Der Bügel 22 ragt an einer Stelle über den Außenumfang der Steckachse 16 hinaus, so dass die Steckachse 16 nur in einer bestimmten Winkelstellung in die Buchse 18 einschiebbar ist. Diese Stellung ist in den Figuren 6 und 7 verdeutlicht. In den Darstellungen der Figuren 8 und 9 ist das Wischblatt bzw. das damit verbundene Kupplungselement 14 in die Betriebsstellung gebracht, so dass der Bügel 22 nicht mehr mit der Längsnut 24 fluchtet und die Steckachse 16 nicht aus der Buchse 18 herausgezogen werden kann. Das Wischblatt 12 ist somit mit dem Wischerarm 10 schwenkbar verriegelt.

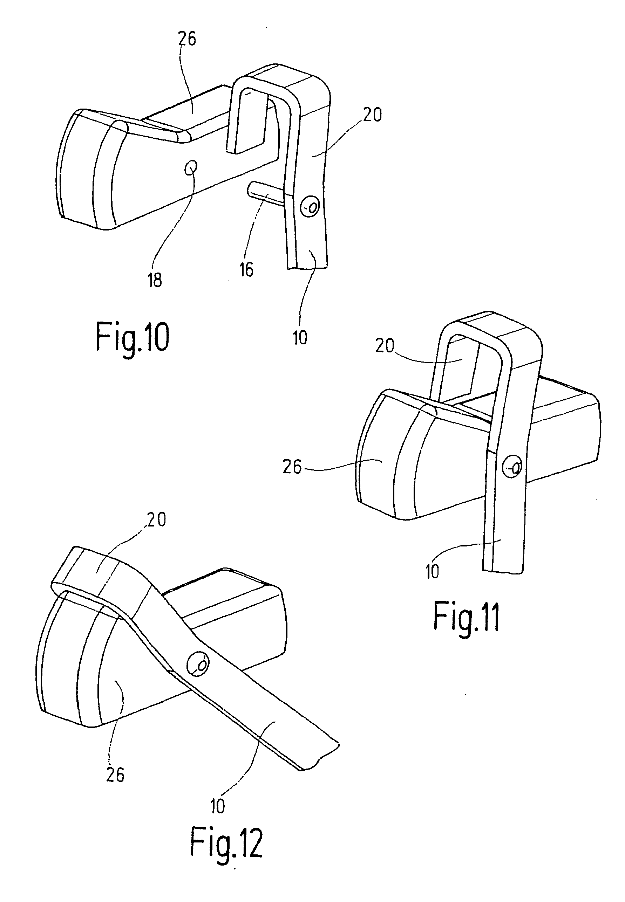

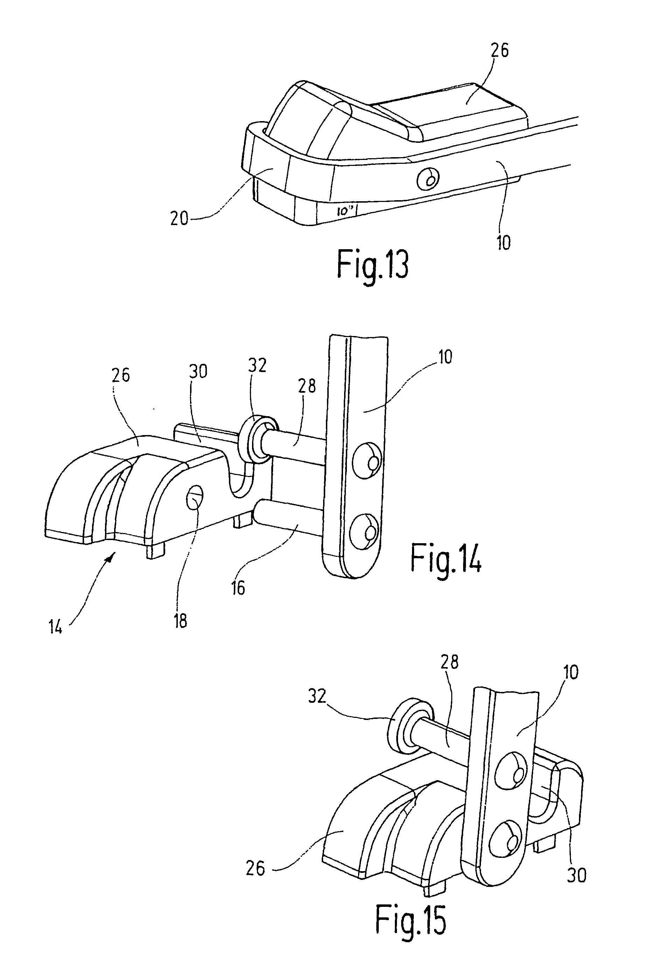

Die Figuren 10 bis 13 verdeutlichen eine dritte Variante einer erfindungsgemäßen Verbindungsanordnung, bei dem der Wischerarm 10 selbst an seinem Ende als U-förmiger Fanghaken 20 ausgebildet ist. Dieser Fanghaken 20 kann eine Abdeckung 26 eines am Wischblatt angebrachten Kupplungselements derart umgreifen, dass die Steckachse 16 nur in einer bestimmten Winkelstellung in die Buchse 18 der Abdeckung 26 einschiebbar ist (vgl. Figuren 10 und 11). Wird das Wischblatt dagegen gegen den Wischerarm 10 verschwenkt (vgl. Figur 12) blockiert der Fanghaken 20 eine axiale Bewegung der Steckachse 16 in der Buchse 18. Gleichzeitig bildet der Fanghaken einen Winkelanschlag für das Wischblatt nahe der Betriebsstellung (vgl. Figur 13). Das Ende des Fanghakens 20 ist zumindest so weit von der Steckachse 16 beabstandet, dass diese in einer bestimmten Winkelstellung in die Buchse 18 eingeschoben werden kann (Figuren 10 und 11). Der Schenkel des Fanghakens 20 weist zumindest eine Weite auf, die ein Umgreifen der Abdeckung 26 und ein Verschwenken mit geringem Spiel ermöglicht. Vorzugsweise ist die Abdeckung 26 so geformt, dass der Fanghaken 20 nahe der Betriebsstellung von einer Stirnseite der Abdeckung 26 blockiert wird, wie dies in Figur 13 verdeutlicht ist.

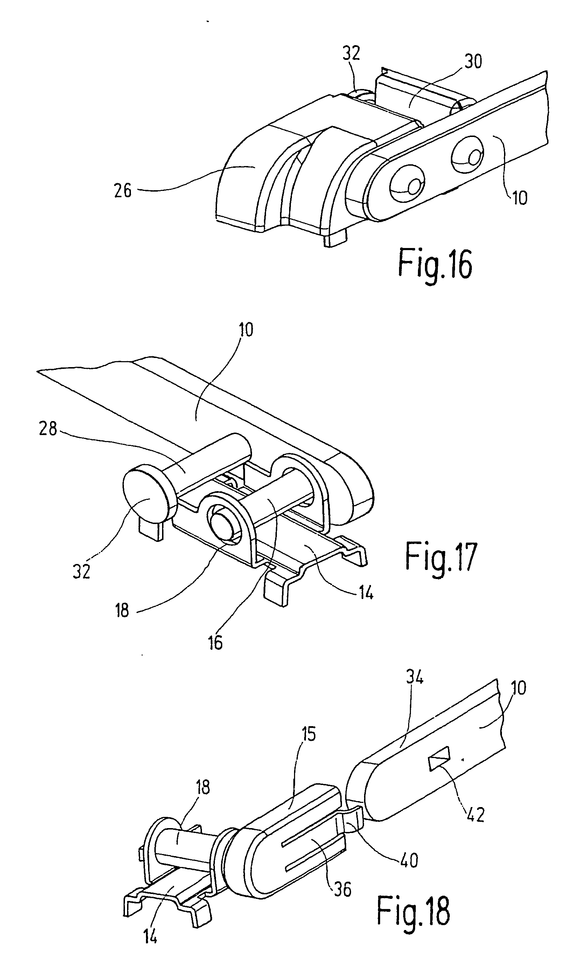

Die Figuren 14 bis 17 zeigen weiterhin eine vierte Variante der erfindungsgemäßen Verbindungsanordnung, bei der nahe der Steckachse 16 und parallel zu dieser ein Verriegelungsstift 28 am Wischerarm 10 angebracht ist, der in eine muldenförmige Aufnahme 30 in der Abdeckung 26 des Kupplungselements 14 eingreifen kann, sobald das Wischblatt in die Betriebsstellung gebracht ist (vgl. Figuren 16 und 17). Die Figuren 14 und 15 verdeutlichen die Montagestellung des Wischblatts, bei der der Verriegelungsstift 28 oberhalb der Abdeckung 26 steht und nicht in die Aufnahme 30 eingreift. Um eine axiale Bewegung der Steckachse 16 in der Buchse 18 in der Betriebsstellung zu verhindern, weist der Verriegelungsstift 28 an seinem freien Ende einen Absatz 32 auf, dessen Außendurchmesser größer ist als die Öffnung der Aufnahme 30. Somit ist der Wischerarm 10 mit dem Wischblatt 12 in der Betriebsstellung schwenkbar verriegelt (vgl. Figur 16). Figur 17 zeigt die Verbindungsanordnung in der Betriebsstellung, wobei hier die Abdeckung 26 vom Kupplungselement 14 abgezogen ist. Das Kupplungselement 14 weist eine Kontur mit zwei parallel nach oben gezogenen Laschen auf, in denen die Buchse 18 als jeweils miteinander fluchtende Durchbrüche ausgebildet ist. Die Aufnahme 30 hingegen wird von der Formgebung der Abdeckung 26 bestimmt.

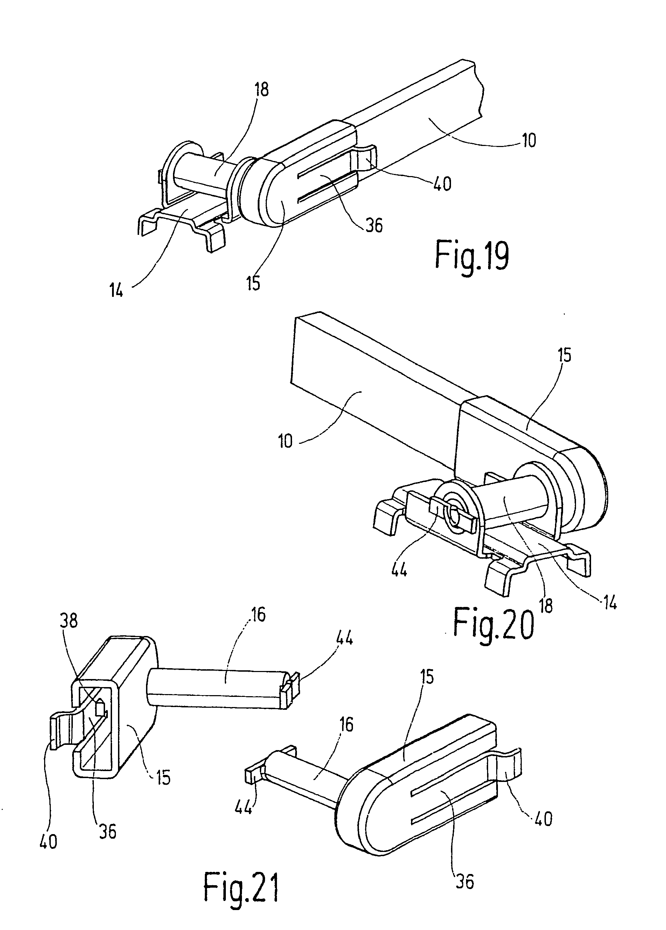

Die Figuren 18 bis 21 zeigen schließlich eine fünfte, nicht erfindungsgemäße Ausführungsform der Verbindungsanordnung, bei welcher der Wischerarm 10 lediglich ein freies Ende mit einer Aussparung 42 aufweist, über das ein zweites Kupplungselement 15 schiebbar ist, an dem das mit dem Wischblatt verbundene Kupplungselement 14 schwenkbar gelagert ist (vgl. Figuren 18 und 19). Die mittels umgelegter Verriegelungslaschen 44 in der Buchse 18 schwenkbar verriegelte Steckachse 16 (vgl. Figur 20) ist hierbei fest am zweiten Kupplungselement 15 angebracht. Dieses weist einen Federbügel 36 auf, der an seiner zum Wischerarm 10 weisenden Innenseite einen Rastnocken 38 aufweist (vgl. Figur 21), der in der auf dem Wischerarm 10 aufgeschobenen Stellung in die Aussparung 42 (vgl. Figur 18) eingreift und für eine lösbare Verriegelung des zweiten Kupplungselements 15 mit dem Wischerarm 10 sorgt. Am freien Ende des Federbügels 36 ist ein Entriegelungsgriff 40 angeordnet, der eine manuelle Entriegelung des Rastnockens 38 und damit ein Abziehen des zweiten Kupplungselements 15 vom freien Ende 34 des Wischerarms 10 ermöglicht.

Die gezeigten fünf Varianten der Verbindungsanordnung ermöglichen alle eine sehr einfach zu handhabende und nur wenige Bauteile aufweisende Verbindung eines Wischblattes mit einem Wischerarm eines Kraftfahrzeuges. Die Verbindungsanordnungen sind aufgrund der nur wenigen und sehr einfach ausgebildeten Bauteile kostengünstig herstellbar und eigenen sich auch zur Nachrüstung von vorhandenen Wischerarmen.

## Patentansprüche

1. Anordnung zur lösbaren Verbindung eines Wischblatts (12) an einem schwenkbaren Wischerarm (10) einer Wischvorrichtung für Schreiben von Kraftfahrzeugen, mit einer mit dem Wischblatt verbindbaren bzw. an diesem angeordneten Buchse (18) zur Aufnahme einer Steckachse (16) des Wischerarms und mit einer Einrichtung zur Verriegelung der Steckachse in der Buchse zumindest in einer Betriebsstellung des Wischblatts, bei der die Längserstreckungsrichtungen des Wischblatts und des Wischerarms annähernd parallel zueinander ausgerichtet sind, wobei die Einrichtung zur Verriegelung einen am Wischerarm (10) angeordneten Fanghaken (20) umfasst, der in der Betriebsstellung eine die Buchse (18) enthaltende Abdeckung (26) eines Kupplungselements (14) des Wischblatts (12) teilweise umgreift und der einen Winkelanschlag für das Wischblatt (12) bildet, **dadurch gekennzeichnet, dass** sich das freie Ende des Wischerarms (10) in den Fanghaken fortsetzt.

2. Anordnung nach Anspruch 1, **dadurch gekennzeichnet, dass** die Steckachse (16) nur in einem vorgegebenen, von der Betriebsstellung verschiedenen Winkelbereich in axialer Richtung in der Buchse (18) verschiebbar ist.

3. Anordnung nach einem der Ansprüche 1 bis 2, **dadurch gekennzeichnet, dass** das Wischblatt (12) in einer Winkelstellung außerhalb der Betriebsstellung vom Wischerarm (10) trennbar ist.

## Claims

1. Arrangement for the releasable connection of a wiper blade (12) to a pivotable wiper arm (10) of a wiper device for motor vehicle windscreens, with a bush (18) which can be connected to the wiper blade or be arranged thereon and is intended for receiving a plug-in spindle (16) of the wiper arm, and with a device for locking the plug-in spindle in the bush at least in an operating position of the wiper blade, in which operating position the directions of the longitudinal extent of the wiper blade and of the wiper arm are oriented approximately parallel to each other, wherein the locking device comprises a catch hook (20) which is arranged on the wiper arm (10) and, in the operating position, partially engages a covering (26), which contains the bush (18), of a coupling element (14) of the wiper blade (12) and which forms an angular stop for the wiper blade (12), **characterized in that** the free end of the wiper arm (10) continues into the catch hook.

2. Arrangement according to Claim 1, **characterized in that** the plug-in spindle (16) is displaceable in the axial direction in the bush (18) only within a predetermined angular range differing from the operating position.

3. Arrangement according to either of Claims 1 to 2, **characterized in that** the wiper blade (12) is separable from the wiper arm (10) in an angular position outside the operating position.

## Revendications

1. Ensemble pour relier de manière amovible un balai d'essuie-glace (12) à un bras d'essuie-glace (10) pivotant d'un dispositif d'essuyage pour des vitres de véhicules automobiles, comprenant une douille (18), qui peut être reliée au balai d'essuie-glace ou qui est disposée sur ce dernier, en vue de la réception d'un axe d'insertion (16) du bras d'essuie-glace, et comprenant un dispositif de verrouillage de l'axe d'insertion dans la douille au moins dans une position de fonctionnement du balai d'essuie-glace dans laquelle les directions d'étendue longitudinale du balai d'essuie-glace et du bras d'essuie-glace sont orientées approximativement parallèlement l'une à l'autre, le dispositif de verrouillage comportant un crochet d'attache (20) disposé sur le bras d'essuie-glace (10), lequel crochet d'attache, dans la position de fonctionnement, vient en prise partiellement autour d'un capot (26), qui contient la douille (18), d'un élément d'accouplement (14) du balai d'essuie-glace (12), et forme une butée angulaire pour le balai d'essuie-glace (12), **caractérisé en ce que** l'extrémité libre du bras d'essuie-glace (10) se prolonge dans le crochet d'attache.

2. Ensemble selon la revendication 1, **caractérisé en ce que** l'axe d'insertion (16) ne peut être coulissé dans la douille (18) dans la direction axiale que dans une plage angulaire prédéfinie qui est différente de la position de fonctionnement.

3. Ensemble selon la revendication 1 ou 2, **caractérisé en ce que** le balai d'essuie-glace (12) peut être séparé du bras d'essuie-glace (10) dans une position angulaire en dehors de la position de fonctionnement.
